# FASCICULE DE BREVET EUROPEEN

(11) **EP 1 057 437 B1**
(45) Date de publication et mention de la délivrance du brevet: **12.05.2004**
(21) Numéro de dépôt: 00401490.8
(22) Date de dépôt: 26.05.2000
(51) Int. Cl.: A47J 27/04, A47J 37/06, A47J 27/12

(54) **Appareil culinaire électrique multi-fonctions**
Multifunktionelles elektrisches Kochgerät
Multifunctional culinary apparatus

(30) Priorité: 31.05.1999 FR 9906848
(43) Date de publication de la demande: 06.12.2000
(73) Titulaire: SEB S.A., 69130 Ecully (FR)
(72) Inventeur: Gouthiere, Christophe, 74150 Rumilly (FR)
(74) Mandataire: Somnier, Jean-Louis

(56) Documents cités:
- DE-A- 3 731 352
- GB-A- 2 256 788
- GB-A- 2 270 459
- US-A- 2 742 850
- US-A- 3 489 267
- US-A- 5 782 165

## Description

La présente invention concerne un appareil culinaire électrique multi-fonctions.

Le secteur technique de l'invention est celui des appareils culinaires de type combinant sur une même base chauffante les fonctions soit de sauteuse et de gril, soit de gril et de cuiseur vapeur.

La base chauffante se compose généralement d'un socle permettant de centrer et caler des récipients de cuisson amovibles, et de moyens de chauffage soit comprenant une résistance positionnée sur un réflecteur, soit externe.

On connaît des sauteuses électriques commercialisées en particulier aux Etats-Unis sous le nom de « skillet ». Certaines comportent une version gril, offrant alternativement la possibilité de rissoler et de griller.

On connaît par ailleurs des appareils de cuisson comme celui décrit dans la demande de brevet GB 2 256 788 dont la base chauffante est constituée, d'un support ayant une ouverture centrale recevant de la chaleur externe dégagée par la flamme d'un appareil à gaz ; cette base chauffante peut recevoir deux types d'éléments supports de cuisson amovible dont l'un est une cuve et l'autre un gril pouvant être utilisés séparément ou en combinaison, avec ou sans couvercle, ce qui permet différents types de cuissons dont en particulier une cuisson à la vapeur.

L'invention se proposer d'élargir et d'améliorer les modes d'utilisation et les fonctions de ces types d'appareils tout en se traduisant par un encombrement minimum de ses éléments rangés.

L'appareil concerné comporte ainsi, de manière connue, une base chauffante, au moins deux éléments supports de cuisson amovibles pouvant être centrés et calés sur ladite base chauffante et constitués, l'un par une cuve, l'autre par une plaque gril à fond lisse ou strié, ainsi qu'un couvercle amovible adapté à fermer la partie supérieure de ladite cuve ou plaque gril pour constituer une enceinte de cuisson.

Ladite plaque gril est pourvue d'au moins un orifice traversant et comprend des moyens permettant de la positionner au-dessus de ladite cuve de cuisson, pour une cuisson à la vapeur dans ladite enceinte de cuisson.

Selon l'invention ladite base chauffante comprend une résistance électrique et ledit couvercle, ladite plaque de cuisson, ladite plaque gril et ladite base chauffante sont emboîtables les uns dans les autres.

La plaque gril remplit sa fonction première de support pour grillades, l'orifice traversant permettant l'écoulement des graisses et jus de cuisson vers un récipient collecteur situé dessous.

Alternativement, la plaque gril, positionnée au-dessus de la cuve, à l'intérieur de l'enceinte de cuisson - autrement dit la cuve étant fermée par le couvercle -, sert de support à des aliments destinés à être cuits à la vapeur. La cuve ayant été préalablement remplie d'eau comme le requiert cette méthode de cuisson, l'orifice traversant la plaque gril sert alors au passage de la vapeur résultant de l'ébullition de l'eau dans la cuve.

L'appareil selon l'invention est donc transformable pour pouvoir constituer l'une des trois structures suivantes supportées par ladite base chauffante :
1) sauteuse composée de ladite cuve éventuellement fermée par le couvercle ;
2) gril composé de ladite plaque gril, éventuellement fermée par le couvercle, et d'un récipient collecteur des jus de cuisson disposé en dessous ;
3) cuiseur-vapeur composé de ladite cuve, ladite plaque gril fermée par le couvercle étant positionnée au-dessus de ladite cuve.

De préférence, la plaque gril comporte des orifices multiples pour que la vapeur chaude arrive en contact direct avec les aliments, par exemple des légumes ou du poisson, supportés par la plaque gril, avant de se répartir dans la partie supérieure de l'enceinte, autrement dit dans le volume disponible entre la surface supérieure de la plaque gril ou les aliments et le haut du couvercle.

L'appareil et ses accessoires étant de plus emboîtables les uns dans les autres présentent un encombrement réduit aussi bien en utilisation qu'à l'état rangé ; de préférence tous les accessoires, à savoir le couvercle, la cuve de cuisson et la plaque gril sont des récipients dont les formes creuses peuvent donc s'emboîter les unes dans les autres, leur fond venant se superposer et même venir en contact les uns au-dessus des autres pour réduire l'encombrement de rangement de ces accessoires.

Ainsi, dans un mode de réalisation préféré, la plaque gril a une paroi latérale évasée de section en S, formant deux rebords successifs, à savoir un premier rebord ou rebord intérieur adapté d'une part à prendre appui sur un rebord de la base chauffante pour la fonction gril et d'autre part à supporter une surface d'appui du couvercle pour la fonction gril et cuisson vapeur, et un second rebord ou rebord extérieur adapté à prendre appui sur un rebord extérieur de la cuve en fonctionnement de cuiseur vapeur.

De cette manière, la plaque gril peut assumer ses deux fonctions, l'une dans une position basse supportée par la base chauffante, l'autre en position haute supportée par la cuve de cuisson, le couvercle reposant sur ledit premier rebord ou rebord intérieur de la plaque gril.

En position haute, du fait que son rebord extérieur prend appui sur le rebord extérieur de la cuve de cuisson, la plaque gril se trouve positionnée à l'intérieur du volume défini par la cuve. Cet empilage de deux récipients ne se traduit donc pas par un encombrement supplémentaire, le volume de l'enceinte demeurant identique en mode sauteuse et en mode de cuiseur vapeur.

D'autres particularités et avantages apparaîtront à la lumière de la description qui suit d'un mode de réalisation préféré de l'invention, donné à titre d'exemple non limitatif.

Aux dessins annexés,
- la figure 1 est une vue en coupe d'un appareil conforme à l'invention, l'enceinte de cuisson étant préparée en mode sauteuse ;
- la figure 2 est une vue en coupe de l'appareil de la figure 1, l'enceinte de cuisson étant remplacée par des accessoires propres à assumer la fonction gril ;
- la figure 3 est une vue en coupe de l'appareil de la figure 1, l'enceinte de cuisson étant en mode de cuiseur vapeur après interposition de la plaque gril ;
- la figure 4 est une vue agrandie du détail A de la figure 3 ;
- la figure 5 est une vue en coupe de l'appareil selon l'invention, à l'état rangé après empilage des différents accessoires sur la base chauffante.

L'appareil comprend une base chauffante 20 comportant un socle 1 en acier ou en une matière plastique résistant à la chaleur, au fond duquel est fixé une résistance électrique 2 disposée de manière sensiblement circulaire au-dessus d'un réflecteur 3 destiné à rayonner vers le haut la chaleur de la résistance. Des parois latérales 10 s'élèvent du fond, pour servir de support aux récipients culinaires amovibles de l'appareil.

La résistance électrique 2 est reliée à une prise adaptée à être connectée au secteur par un cordon d'alimentation non représenté.

Sur les parois du socle 1 sont fixées des poignées 4 faisant également office de pieds pour reposer sur une table ou un plan de travail 40, et pouvant intégrer les organes de régulation thermique, thermostat et coupe-circuit de l'appareil.

La partie supérieure des parois verticales 10 du socle 1 permet de centrer et de caler les différents récipients amovibles que comporte l'appareil, à savoir en particulier une cuve de cuisson 5 et une plaque gril 6 comportant un fond 50, 60 respectivement, complémentaire par sa forme de la partie supérieure des parois verticales 10 destiné à le supporter.

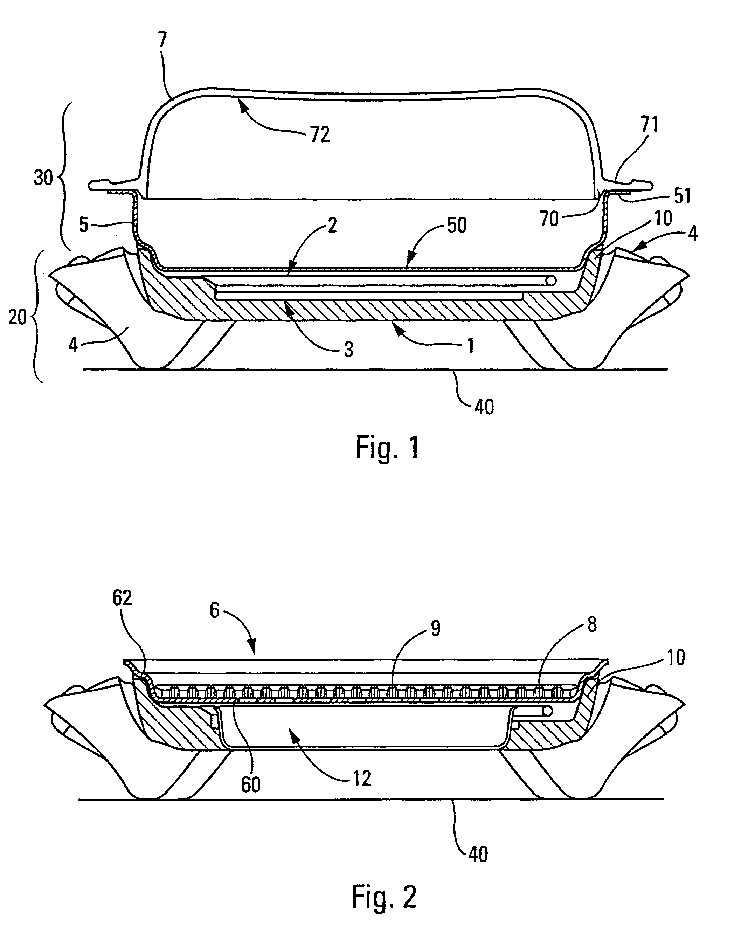

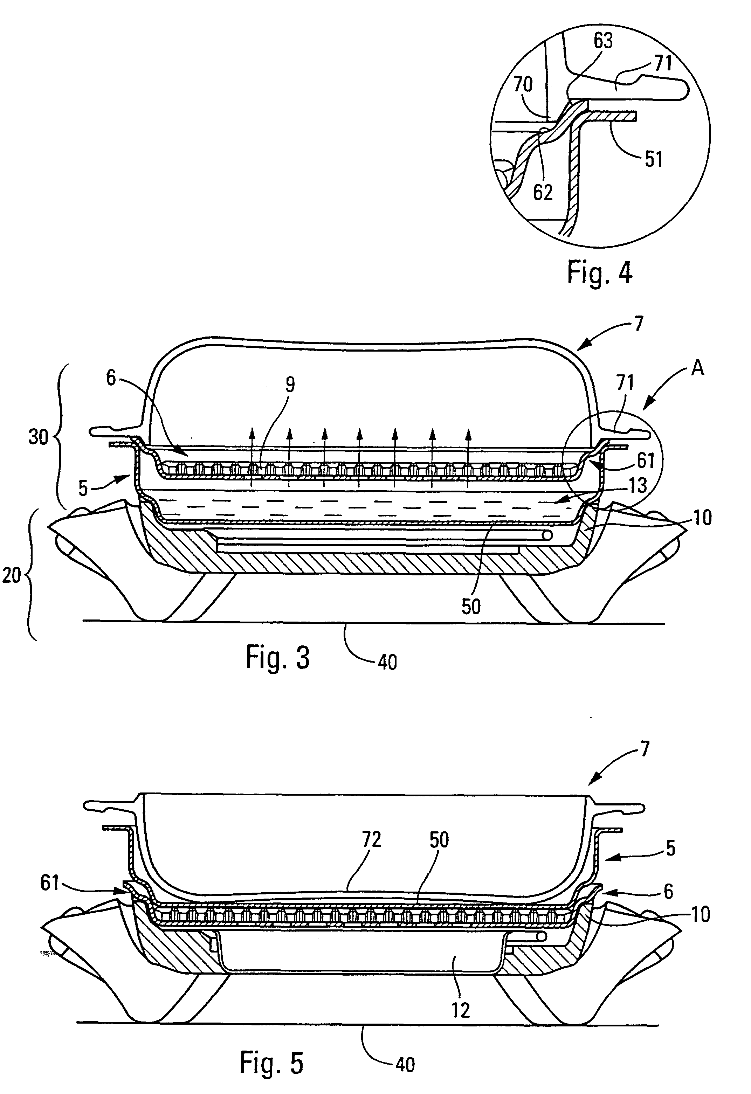

La cuve de cuisson 5, par exemple en aluminium à revêtement intérieur anti-adhésif ou tout autre matériau adapté, peut être fermée à sa partie supérieure par un couvercle 7, de préférence en verre, en forme de cuve inversée, avec lequel la cuve constitue une enceinte de cuisson 30 pour un fonctionnement en mode sauteuse (voir figure 1) ou en mode cuiseur vapeur (voir figure 3).

La plaque gril 6, qui se présente sous la forme d'un récipient creux peu profond, par exemple en aluminium à revêtement intérieur anti-adhésif, comporte à la surface supérieure de son fond 60, des nervures parallèles 8 dont certaines sont traversées en divers endroits par des orifices 9 répartis au moins sur le centre sinon sur l'ensemble du fond 60.

En fonction gril (voir figure 2), les orifices 9 permettent l'écoulement des graisses et jus de cuisson vers un récipient collecteur 12 placé en dessous, sur le fond du socle 1.

En fonction de cuiseur vapeur, l'enceinte de cuisson 30 intègre la plaque gril 6 disposée au-dessus du fond 50 de la cuve 5. Celle-ci ayant été remplie d'eau 13, les orifices 9 serviront au passage de la vapeur qui s'élèvera de la surface de l'eau en ébullition, débouchant directement au contact des aliments disposés sur la plaque gril 6, comme représenté par les flèches de la figure 3.

La plaque gril 6 est suspendue dans le volume défini par la cuve 5 au-dessus du fond 50. A cette fin, la plaque gril 6 présente une paroi verticale périphérique 61 évasée de section en S, définissant deux rebords successifs :

En référence à la figure 4, un premier rebord ou rebord intérieur 62 formant ressaut dans la paroi 61 est adapté par sa surface inférieure à prendre appui sur la partie supérieure des parois latérales 10 du socle 1 et à supporter par sa surface supérieure une surface d'appui 70 du couvercle, tandis qu'un second rebord ou rebord extérieur 63 est adapté à prendre appui sur un rebord extérieur périphérique ou formant poignées 51 de la cuve de cuisson 5.

Le couvercle 7 comporte quant à lui, à sa base, un rebord extérieur périphérique ou formant poignées 71 qui, en mode de fonctionnement sauteuse de l'appareil (voir figure 1), prend appui sur le rebord extérieur 51 de la cuve de cuisson pour fermer celle-ci.

En mode de cuisson vapeur (voir figures 3 et 4), le rebord extérieur 71 du couvercle, prenant appui sur le rebord extérieur 51 de la cuve après interposition de la plaque gril 6, vient pincer par gravité le rebord extérieur 63 de cette dernière, compensant ainsi la poussée qu'il exerce sur le rebord intérieur 62.

Une telle coopération de surfaces entre le couvercle 7, le bord de la cuve 5 et le bord de la plaque gril 6 assure non seulement un calage efficace du couvercle 7 et de la plaque gril 6 suspendue dans le volume intérieur défini par la cuve 5, mais également une bonne étanchéité de l'enceinte de cuisson 30 pour une montée plus rapide en température de l'eau.

Complémentairement, la forme évasée de la paroi verticale 61 de la plaque gril 6 permet à cette dernière, au moment du rangement des accessoires divers composant l'appareil, de recevoir le fond 50 de la cuve de cuisson 5, comme illustré à la figure 5.

Pour ranger l'appareil et ses différents accessoires, on le prépare comme en mode de fonction gril (voir figure 2), le récipient de collecte des jus de cuisson 12 reposant sur le fond du socle 1, et la plaque gril 6 prenant appui sur le rebord 10 du socle 1.

Viennent alors la cuve de cuisson 5, s'emboîtant par son fond 50 dans la plaque gril 6, puis le couvercle 7, inversé en cuve et s'emboîtant par son fond 72 dans la cuve de cuisson 5 (voir figure 5) ; dans un autre mode de rangement, on peut préparer l'appareil comme en mode de fonctionnement sauteuse en disposant en premier la cuve de cuisson 5 qui s'emboîte par son fond 50 dans le socle 1 en prenant appui sur le rebord 10 de celui-ci ; viennent alors le couvercle 7 inversé en cuve et s'emboîtant par son fond 72 dans la cuve de cuisson 5, puis la plaque gril 6 est disposée en dernier sur et dans ledit couvercle 7.

Les formes des accessoires permettent leur empilage judicieux, de sorte que l'appareil rangé présente un encombrement minimum, inférieur à celui de l'appareil préparé avec une partie seulement de ses accessoires, en mode sauteuse ou cuiseur vapeur, l'enceinte de cuisson étant constituée.

Du fait de sa forme de cuve inversée, le couvercle peut également être utilisé dans un four comme plat à gratiner.

On a ainsi un appareil électrique culinaire polyvalent qui, avec deux récipients amovibles et leur combinaison, permet d'assumer trois fonctions : (sauteuse pour rissoler, gril pour griller et cuiseur vapeur ou poissonnière), et qui peut se ranger facilement grâce à l'emboîtement et empilage successifs dans un ordre ou dans un autre de ces récipients et de son couvercle sur ledit socle 1.

Bien entendu, l'invention n'est pas limitée au mode de réalisation décrit, et de nombreuses variantes peuvent être envisagées sans sortir du cadre de l'invention.

Par exemple, au lieu d'être suspendue dans la cuve de cuisson par un rebord extérieur, la plaque gril pourrait être placée dans la cuve de cuisson sur une entretoise indépendante ou des pieds solidaires de son fond, de manière à être maintenue au-dessus du niveau d'eau nécessaire à la cuisson vapeur.

## Revendications

1. Appareil culinaire multifonction comportant une base (20) chauffante comprenant une résistance électrique (2), une cuve de cuisson (5) amovible formant un support de cuisson pouvant être centré et calé sur la base (20), un couvercle (7) amovible adapté, quand il est en position normale, à fermer la partie supérieure de la cuve (5) pour constituer une enceinte de cuisson (30), et une plaque gril (6) amovible formant un support de cuisson pouvant être centré et calé sur la base (20), pourvue d'au moins un orifice traversant (9), et comprenant des moyens (61) permettant son positionnement au-dessus de la cuve (5), **caractérisé en ce que** la base (20), la cuve (5), le couvercle (7) en position inversé, et la plaque gril (6) sont emboîtables les uns dans les autres.

2. Appareil culinaire selon la revendication 1, **caractérisé en ce qu'**il est transformable pour pouvoir constituer l'une des trois structures suivantes:
1) une sauteuse composée de la cuve (5) qui est supportée par la base (20), et, éventuellement, du couvercle (7) qui recouvre la cuve (5);
2) un gril composé de la plaque gril (6) qui est supportée par la base (20), d'un récipient (12) collecteur des jus de cuisson disposé sous la plaque gril (6), et, éventuellement, du couvercle (7) qui recouvre la plaque gril (6);
3) un cuiseur-vapeur composé de la cuve (5) qui est supportée par la base (20), de la plaque gril (6) qui est positionnée au-dessus de la cuve (5), et du couvercle (7) qui recouvre la cuve (5) et la plaque gril (6).

3. Appareil culinaire selon la revendication 1 ou 2, **caractérisé en ce que** la plaque gril (6) est pourvue de plusieurs orifices (9).

4. Appareil culinaire selon la revendication 3, **caractérisé en ce que** les orifices (9) traversent des nervures (8) ménagées à la surface supérieure de la plaque gril (6).

5. Appareil culinaire selon l'une des revendications 1 à 4, **caractérisé en ce que** la plaque gril (6) comporte un rebord (63) prenant appui sur un rebord (51) de la cuve (5) pour permettre sa suspension à l'intérieur du volume défini par la cuve (5).

6. Appareil culinaire selon l'une des revendications 1 à 5, **caractérisé en ce que** la plaque gril (6) comporte une paroi latérale (61) comportant un premier rebord (62) formant ressaut dont la surface supérieure est adaptée à supporter une surface d'appui (70) du couvercle (7) en position normale et à caler ce dernier latéralement.

7. Appareil culinaire selon la revendication 6, **caractérisé en ce que** la paroi latérale (61) de la plaque gril (6) a une section en S et forme deux rebords successifs (62,63), à savoir le premier rebord (62) dont la surface inférieure est adaptée à prendre appui sur un rebord (10) de la base (20), et un second rebord (63) qui est extérieur au premier rebord (62) et qui est adapté à prendre appui sur un rebord extérieur (51) de la cuve (5).

8. Appareil culinaire selon la revendication 7, **caractérisé en ce que** le couvercle (7) comporte à sa base un rebord extérieur (71) susceptible, quand il est en position normale, de prendre appui sur le rebord extérieur (51) de la cuve (5) pour fermer celle-ci, et, quand la plaque gril (6) est en appui sur le rebord extérieur (51) de la cuve (5), de venir pincer par gravité le rebord extérieur (63) de la plaque gril (6).

9. Appareil culinaire selon l'une des revendications 1 à 8, **caractérisé en ce que** le couvercle (7) a une forme de cuve inversée permettant son utilisation comme plat de cuisson.

10. Appareil culinaire selon l'une des revendications 1 à 9, **caractérisé en ce que** le couvercle (7) en position inversée peut s'emboîter par son fond (72) dans la cuve de cuisson (5).

11. Appareil culinaire selon l'une des revendications 1 à 10, **caractérisé en ce que** la cuve de cuisson (5) peut s'emboîter par son fond (50) dans la plaque gril (6).

## Patentansprüche

1. Multifunktionelles elektrisches Kochgerät mit einer Heizbasis (20) mit einem elektrischen Widerstand (2), einem abnehmbaren Kochtopf (5), der einen Träger für das Kochen bildet und auf der Basis (20) zentriert und gehalten werden kann, einem abnehmbaren Deckel (7), der in seiner normalen Stellung dazu dient, den oberen Teil des Topfes (5) zu verschließen, um einen Kochraum (30) zu bilden, und einer abnehmbaren Grillplatte (6), die einen Träger beim Kochen bildet und auf der Basis (20) zentriert und gehalten werden kann und mit mindestens einem Durchgangsloch (9) versehen ist, und mit Vorrichtungen (61), die ihre Positionierung über dem Topf (5) ermöglichen, **dadurch gekennzeichnet, daß** die Basis (20), der Topf (5), der Deckel (7) in umgekehrter Stellung und die Grillplatte (6) ineinander einsetzbar sind.

2. Kochgerät nach Anspruch 1, **dadurch gekennzeichnet, daß** es verwandelbar ist, um eine der drei folgenden Strukturen zu bilden:
1) ein Schmorgerät, bestehend aus dem Topf (5), der von der Basis (20) getragen ist und gegebenenfalls dem Deckel (7), der den Topf (5) verschließt;
2) einen Grill, bestehend aus der Grillplatte (6), die von der Basis (20) getragen ist, einem unter der Grillplatte (6) angeordneten Gefäß (12) zum Auffangen des Bratensaftes und gegebenenfalls dem Deckel (7), der die Grillplatte (6) abdeckt;
3) einen Dampfkocher, bestehend aus dem Topf (5), der von der Basis (20) getragen ist, der oberhalb des Topfes (5) angeordneten Grillplatte (6) und dem Deckel (7), der den Topf (5) und die Grillplatte (6) abdeckt.

3. Kochgerät nach Anspruch 1 oder 2, **dadurch gekennzeichnet, daß** die Grillplatte (6) mit mehreren Löchern (9) versehen ist.

4. Kochgerät nach Anspruch 3, **dadurch gekennzeichnet, daß** die Löcher(9) Rippen (8) durchsetzen, die an der Oberseite der Grillplatte (6) ausgebildet sind.

5. Kochgerät nach einem der Ansprüche 1 bis 4, **dadurch gekennzeichnet, daß** die Grillplatte (6) eine Randleiste (63) aufweist, die sich auf einer Randleiste (51) des Topfes (5) abstützt, um ihre Aufhängung im Inneren des vom Topf (5) definierten Volumens zu ermöglichen.

6. Kochgerät nach einem der Ansprüch 1 bis 5, **dadurch gekennzeichnet, daß** die Grillplatte (6) eine Seitenwand (61) mit einer ersten Randleiste (62) aufweist, die einen Absatz bildet, dessen obere Fläche zur Abstützung einer Auflagefläche (70) des Deckels (7) in seiner normalen Stellung und zum seitlichen Einklemmen desselben eingerichtet ist.

7. Kochgerät nach Anspruch 6, **dadurch gekennzeichnet, daß** die Seitenwand (61) der Grillplatte (6) einen S-förmigen Querschnitt hat und zwei aufeinanderfolgende Randleisten (62, 63) bildet, nämlich die erste Randleiste (62), deren untere Seite zur Auflage auf einer Randleiste (10) der Basis (20) bestimmt ist, und eine zweite Randleiste (63), die hinsichtlich der ersten Randleiste (62) außen liegt und dazu eingerichtet ist, daß sie sich auf einer äußeren Randleiste (51) des Topfes (5) abstützt.

8. Kochgerät nach Anspruch 7, **dadurch gekennzeichnet, daß** der Deckel (7) an seiner Basis eine äußere Randleiste (71) aufweist, die, wenn der Deckel sich in der normalen Stellung befindet, auf der äußeren Randleiste (51) des Topfes (5) aufliegt, um diesen zu verschließen, und wenn die Grillplatte (6) auf dem Außenrand (51) des Topfes (5) aufliegt, die äußere Randleiste (63) der Grillplatte (6) durch ihr Gewicht einklemmt.

9. Kochgerät nach einem der Ansprüche 1 bis 8, **dadurch gekennzeichnet, daß** der Deckel (7) die Form einer umgekehrten Schale hat, welche seine Verwendung als Kochschüssel ermöglicht.

10. Kochgerät nach einem der Ansprüche 1 bis 9, **dadurch gekennzeichnet, daß** der Deckel (7) in seiner umgekehrten Stellung mit seinem Boden (72) in den Kochtopf (5) einsetzbar ist.

11. Kochgerät nach einem der Ansprüche 1 bis 10, **dadurch gekennzeichnet, daß** der Kochtopf (5) mit seinem Boden (50) in die Grillplatte (6) einsetzbar ist.

## Claims

1. A multifunction cooking appliance comprising a heating base (20) comprising an electric resistance (2), a detachable cooking pan (5) forming a cooking support and adapted to be centred and secured on the base (20), a detachable lid (7) adapted, when in the normal position, to close the top part of the pan (5) to form a cooking enclosure (30), and a detachable grill plate (6) forming a cooking support adapted to be centred and secured on the base (20), provided with at least one through orifice (9), and comprising means (61) allowing it to be positioned above the pan (5), **characterised in that** the base (20), the pan (5), the lid (7) in the reversed position, and the grill plate (6) are nestable in one another.

2. A cooking appliance according to claim 1, **characterised in that** it is convertible in order to form one of the following three structures:
1) a frying pan consisting of the pan (5) which is supported by the base (20) and, if required, the lid (7) covering the pan (5);
2) a grill consisting of the grill plate (6) which is supported by the base (20), a receptacle (12) to collect the cooking juices disposed beneath the grill plate (6) and, if required, the lid (7) which covers the grill plate (6);
3) a steamer consisting of the pan (5) supported by the base (20), the grill plate (6) positioned above the pan (5), and the lid (7) covering the pan (5) and the grill plate (6).

3. A cooking appliance according to claim 1 or 2, **characterised in that** the grill plate (6) is provided with a plurality of orifices (9).

4. A cooking appliance according to claim 3, **characterised in that** the orifices (9) extend through ribs (8) formed at the top surface of the grill plate (6).

5. A cooking appliance according to any one of claims 1 to 4, **characterised in that** the grill plate (6) comprises a rim (63) bearing on a rim (51) of the pan (5) to allow its suspension inside the volume defined by the pan (5).

6. A cooking appliance according to any one of claims 1 to 5, **characterised in that** the grill plate (6) comprises a side wall (61) having a first rim (62) forming a shoulder, the top surface of which is adapted to support a bearing surface (70) of the lid (7) in the normal position and secure the latter laterally.

7. A cooking appliance according to claim 6, **characterised in that** the side wall (61) of the grill plate (6) has an S-shaped section and forms two successive rims (62, 63), namely the first rim (62), the bottom surface of which is adapted to bear on a rim (10) of the base (20), and a second rim (63) which is outside the first rim (62) and which is adapted to bear on an outside rim (51) of the pan (5).

8. A cooking appliance according to claim 7, **characterised in that** the lid (7) has at its base an outside rim (71) adapted, when in the normal position, to bear on the outside rim (51) of the pan (5) to close the latter and, when the grill plate (6) bears on the outside rim (51) of the pan (5), clamp the outside rim (63) of the grill plate (6) by gravity.

9. A cooking appliance according to any one of claims 1 to 8, **characterised in that** the lid (7) has an inverted pan shape to enable it to be used as a cooking plate.

10. A cooking appliance according to any one of claims 1 to 9, **characterised in that** the lid (7) in the inverted position can nest by its base (72) in the cooking pan (5).

11. A cooking appliance according to any one of claims 1 to 10, **characterised in that** the cooking pan (5) can nest by its base (50) in the grill plate (6).
